(19) Europäisches Patentamt

European Patent Office

Office européen des brevets

(11) **EP 4 283 535 A1**

(12) **EUROPEAN PATENT APPLICATION**

(43) Date of publication:
**29.11.2023 Bulletin 2023/48**

(21) Application number: **23169767.3**

(22) Date of filing: **25.04.2023**

(51) International Patent Classification (IPC):
***G06N 10/60*** *(2022.01)*

(52) Cooperative Patent Classification (CPC):
**G06N 10/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.05.2022 GB 202207665**

(71) Applicant: **Rolls-Royce plc**
**London N1 9FX (GB)**

(72) Inventor: **Lapworth, Bryan L.**
**Derby, DE24 8BJ (GB)**

(74) Representative: **Rolls-Royce plc**
**Intellectual Property Dept SinA-48**
**PO Box 31**
**Derby DE24 8BJ (GB)**

(54) **DETERMINING SOLUTIONS TO A NUMBER OF LINEAR MATRIX EQUATIONS**

(57)     A method, performed on at least one computing device, of determining solutions to a number of linear matrix equations satisfying $A\vec{x} = \vec{b}$, where $A$ is a $n \times n$ matrix, $\vec{x}$ is a column vector with $n$ entries, and $\vec{b}$ is a column vector with $n$ entries, is disclosed. The method comprises determining a linear combination of unitary matrices that is equivalent to the matrix $A$; based on the linear combination of unitary matrices, determining a column vector $\vec{x}$ that satisfies the linear matrix equation; forming an updated matrix A based on the obtained column vector $\vec{x}$; forming an updated column vector $\vec{b}$ based on the obtained column vector $\vec{x}$; updating the coefficients of the linear combination of unitary matrices based on the updated column vector $\vec{x}$; and based on the updated linear combination of unitary matrices, determining an updated column vector $\vec{x}$ that satisfies the updated linear matrix equation.

Fig. 2

**Description**

Technical Field

Examples of the present disclosure relate to methods, performed on at least one computing device (for example, a classical computing device, or a classical computing device and a quantum computing device), of determining solutions to a number of linear matrix equations satisfying $A\vec{x} = \vec{b}$, where $A$ is a $n \times n$ matrix, $\vec{x}$ is a column vector with $n$ entries, and $\vec{b}$ is a column vector with $n$ entries.

Background

The uses of Computational Fluid Dynamics (CFD) range from designing widgets on a laptop, to simulating flow through gas turbines using classical supercomputers. CFD is utilized when designing most gas turbine components, where it may be used to model high performance aerodynamics and/or to model combustion and its by-products, for example. Considering aerodynamics as an example, CFD allows the shapes of rotor and stator blades at a sub-system level to be optimized, enabling target performance to be achieved in terms of efficiency and pressure ratio for a compressor. A CFD process such as this will typically feature many iterations of a design, and therefore typically consumes large amounts of supercomputing resources. Finite Element Analysis (FEA) for stress and vibration are also key parts of creating such designs, and also operate in a similar way.

Typically, CFD and FEA problems such as these are solved iteratively, in order to obtain an optimum solution to the problem, and therefore an optimum component design.

Whilst the equations governing CFD and FEA are highly non-linear, many methods for solving CFD and FEA problems utilize a two-step approach, in which a first non-linear step is executed to linearize the equations relating to the problem, and a second linear step is executed to determine a solution to the linearized equations. Typically, CFD and FEA problems solve a linearized matrix, or a linearized set of matrices, in this second linear step.

The two-step approach is repeated, i.e. iterated, with the solution of the linearized equations being used to update the non-linear variables and create new linearized equations which are solved as before. The sequence is repeated until the updates to the non-linear equations are below a defined threshold and the non-linear equations are considered to have been solved.

Such a linearized matrix, or a linearized set of matrices, may be solved using a quantum computing device. However, solving a classical matrix equation ($A\vec{x} = \vec{b}$, where $A$ is a $n \times n$ matrix, $\vec{x}$ is a column vector with $n$ entries, and $\vec{b}$ is a column vector with $n$) on a quantum computing device requires the matrix $A$ to be decomposed into a sum of unitary matrices as follows:

$$A = \sum_{i=1}^{n} \alpha_i U_i$$

The unitary matrices ($U_i$) can be implemented on a quantum computing device using existing algorithms, for example, the Harrow, Hassidim and Lloyd (HHL) algorithm.

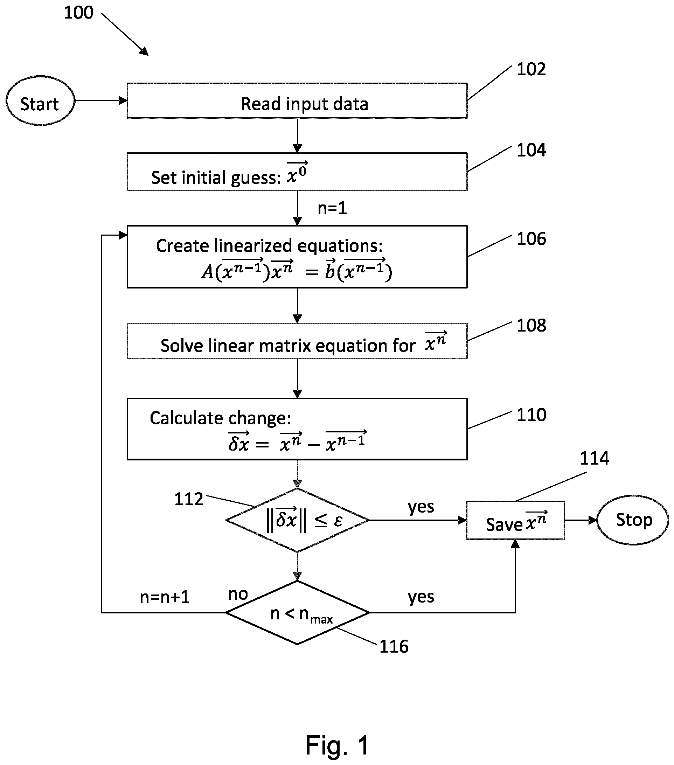

Figure 1 is a flowchart illustrating an example method 100 that may be executed in order to solve a non-linear problems using iterative techniques.

At step 102, the method 100 comprises reading the input data relating to a problem. At step 104, the method 100 comprises determining an initial state for the problem based on this data, represented by the vector $\vec{x_0}$. The initial state may comprise one or more physical variables, such as an initial set of velocity vectors and/or initial density values and/or initial pressure values. Following step 102, the method 100 further comprises setting the value of a counter n as 1, where n represents the number of iterations of the method 100.

At step 106, the method 100 comprises expressing one or more equations relating to the problem (for example, one or more equations that describe how the variables describing the initial state evolve, such as the non-linear Navier Stokes equations) as a linearised system that aims to solve a linear matrix equation of the form linear matrix equations satisfying $A\vec{x} = \vec{b}$, where $A$ and $\vec{b}$ depend non-linearly on $\vec{x}$.

At step 108, the method 100 comprises solving the linear matrix equation $A(\overrightarrow{x^{n-1}})\vec{x^n} = \vec{b}(\overrightarrow{x^{n-1}})$ to obtain the vector $\vec{x^n}$. It will be appreciated that the column vector $\vec{x^n}$ represents the current solution to the problem obtained for the current iteration of the method 100 (that is, the solution to the problem that has been obtained on the nth iteration of the method 100).

At step 110, the method 100 comprises determining the vector $\vec{\delta x}$, where $\vec{\delta x} = \overrightarrow{x^n} - \overrightarrow{x^{n-1}}$. That is, the vector $\vec{\delta x}$ represents the difference between the current solution to the problem represented by the column vector $\vec{x^n}$, and the previous solution to the problem represented by the column vector $\overrightarrow{x^{n-1}}$.

At step 112, the method 100 comprises determining whether a particular convergence criterion has been met. For example, the convergence criterion may be that the absolute value of the vector $\vec{\delta x}$ is below or equal to a particular threshold $\varepsilon$. If it is determined that the particular convergence criterion has been met, the method 100 proceeds to step 114. Otherwise, the method 100 proceeds to step 116.

At step 116, the method 100 comprises determining whether a maximum number of iterations of the method has been exceeded. If it is determined that the maximum number of iterations has been exceeded, the method 100 proceeds to step 114. Otherwise, the method 100 proceeds to step 106, and the value of the counter n is incremented by 1. At step 106, the matrix $A$ and the column vector $\vec{b}$ are updated based on the obtained column vector $\vec{x}$. That is, the solution of the linearized equations is used to update the non-linear variables, and create new linearized equations, which are then solved in the next iteration of the method 100 as described above.

At step 114, the updated column vector $\vec{x}$ is saved as the solution to the problem associated with the final linearized system $A\vec{x} = \vec{b}$. That is, at step 114, the non-linear equations are considered to have been solved.

In some embodiments, step 108 of the method 100 may comprise solving the linear matrix equation $A(\overrightarrow{x^{n-1}})\overrightarrow{x^n} = \vec{b}(\overrightarrow{x^{n-1}})$ using a quantum computing device. However, as noted above, solving the linear matrix equation $A(\overrightarrow{x^{n-1}})\overrightarrow{x^n} = \vec{b}(\overrightarrow{x^{n-1}})$ using a quantum computing device requires the matrix $A$ be decomposed into a sum of unitary matrices as follows:

$$A = \sum_i \alpha_i U_i$$

Following this decomposition, a quantum computing device may then be utilised to solve the following linear matrix equation to obtain $\overrightarrow{x^n}$:

$$\sum_i \alpha_i^{n-1} U_i^{n-1} \overrightarrow{x^n} = \vec{b}(\overrightarrow{x^{n-1}})$$

Therefore, when utilizing a quantum computing device in this manner, the method 100 requires the matrix $A$ to decomposed into a sum of unitary matrices for each iteration of the method 100. For small matrices, this decomposition is relatively simple, but quickly becomes complex and computationally expensive for larger matrices. Therefore, presently, quantum computing devices are utilized to solve problems based on either integer valued matrices, or matrices where a small number of real values are repeated, for example, along a diagonal, rather the larger, more complicated matrices that are required to be solved in CFD and FEA problems.

Summary

One aspect of this disclosure provides a method of determining solutions to a number of linear matrix equations satisfying $A\vec{x} = \vec{b}$, where $A$ is a $n \times n$ matrix, $\vec{x}$ is a column vector with $n$ entries, and $\vec{b}$ is a column vector with $n$ entries. The method comprises determining a linear combination of unitary matrices that is equivalent to the matrix $A$; based on the linear combination of unitary matrices, determining a column vector $\vec{x}$ that satisfies the linear matrix equation; forming an updated matrix A based on the obtained column vector $\vec{x}$; forming an updated column vector $\vec{b}$ based on the obtained column vector $\vec{x}$; updating the coefficients of the linear combination of unitary matrices based on the updated column vector $\vec{x}$; and based on the updated linear combination of unitary matrices, determining an updated column vector $\vec{x}$ that satisfies the updated linear matrix equation.

Another aspect of this disclosure provides a method, performed on at least one computing device, of determining solutions to a number of linear matrix equations satisfying $A\vec{x} = \vec{b}$, where $A$ is a $n \times n$ matrix, $\vec{x}$ is a column vector with $n$ entries, and $\vec{b}$ is a column vector with $n$ entries. The method comprises determining a linear combination of unitary matrices that is equivalent to the matrix $A$; based on the linear combination of unitary matrices, determining a column vector $\vec{x}$ that satisfies the linear matrix equation; forming an updated matrix A based on the obtained column vector $\vec{x}$; forming an updated column vector $\vec{b}$ based on the obtained column vector $\vec{x}$; updating the coefficients of the linear combination of unitary matrices based on the updated column vector $\vec{x}$; and based on the updated linear combination of unitary matrices, determining an updated column vector $\vec{x}$ that satisfies the updated linear matrix equation.

The step of updating the coefficients of the linear combination of unitary matrices based on the updated column vector $\vec{x}$ may comprise: updating one or more values of the entries of the matrix $A$ based on the updated column vector $\vec{x}$; and updating the coefficients of the linear combination of unitary matrices based on the one or more updated values of the entries of the matrix $A$.

Each of the unitary matrices may have a sparsity pattern that corresponds to a part of a sparsity pattern of the matrix $A$.

The updated matrix A, and the matrix A, may have the same sparsity pattern.

The step of determining a linear combination of unitary matrices that is equivalent to the matrix $A$ may comprise: forming one or more groups of unitary matrices, such that the unitary matrices comprised within a particular group share the same sparsity pattern; and for each group of unitary matrices, determining the coefficients of the linear combination of the subset of unitary matrices comprised within the group.

The step of updating the coefficients of the linear combination of unitary matrices based on the updated column vector $\vec{x}$ may comprise: for each group of unitary matrices, determining the updated coefficients of the linear combination of the unitary matrices for the unitary matrices comprised within the group.

Each unitary matrix may consist of a tensor product of one or more Pauli matrices and/or an identity matrix.

The step of determining a linear combination of unitary matrices that is equivalent to the matrix $A$ may comprise: for each group of unitary matrices: converting each unitary matrix in the group into a column vector comprising the non-zero entries of the respective unitary matrix; and forming a cluster matrix for the group, the cluster matrix comprising each of the column vectors.

Each cluster matrix may be a unitary matrix multiplied by scalar factor of $2^{\frac{n}{2}}$ where $n$ is the number of Pauli products in each unitary.

The at least one computing device may comprise a quantum computing device, and wherein the step of determining a column vector $\vec{x}$ that satisfies the linear matrix equation may comprise: (i) manipulating quantum states of qubits of the quantum computing device based on the linear combination of unitary matrices and the vector $\vec{b}$; (ii) obtaining a measurement of one or more qubits; (iii) repeating steps (i) and (ii) to obtain a number of measurements; and (iv) based on the obtained measurements, determining the column vector $\vec{x}$.

An initial state of the qubits of the quantum computing device may represent the column vector $\vec{b}$.

Manipulating quantum states of the qubits of the quantum computing device may comprise: applying one or more Pauli gates to one or more qubits of the quantum computing device, wherein each of the one or more Pauli gates represents a respective unitary matrix within the linear combination of unitary matrices.

Manipulating quantum states of the qubits of the quantum computing device may comprise: applying one or more rotation gates to one or more qubits of the quantum computing device, wherein each of the one or more rotation gates represents a respective unitary matrix within the linear combination of unitary matrices.

The at least one computing device may comprise a classical computing device, and wherein the column vector $\vec{x}$ that satisfies the linear matrix equation may be determined using the classical computing device.

The at least one computing device may further comprise a number of classical computing cores, and wherein the step determining a linear combination of unitary matrices that is equivalent to the matrix $A$ may be performed in parallel on a number of classical computing cores.

The method may comprise, for each of the number of classical computing cores: determining a subset of the unitary matrices comprised within the linear combination of unitary matrices.

The method may comprise, for each of the number of classical computing cores: determining a subset of the coefficients of the linear combination of the unitary matrices.

The at least one computing device may further comprise a number of classical computing cores, and wherein the step of updating the coefficients of the linear combination of unitary matrices based on the updated column vector $x$ is performed in parallel on a number of classical computing cores.

The method may comprise, for each of the number of classical computing cores: determining a subset of the updated coefficients of the linear combination of the unitary matrices.

The updated column vector $\vec{x}$ may represent a solution to a problem associated with the linearized system $A\vec{x} = \vec{b}$.

The updated column vector $\vec{x}$ may represent a solution to a computational fluid dynamics problem.

The updated column vector $\vec{x}$ may represent a solution to a finite element analysis problem.

The method may further comprise: using the obtained solution in a design process of a component, sub-system or system.

An additional aspect of this disclosure provides a computer program comprising instructions which, when executed on at least one processor, cause the at least one processor to carry out a method according to any of the preceding paragraphs of the summary.

A further aspect of this disclosure provides a computer program product comprising non transitory computer readable media having stored thereon a computer program according to the preceding paragraph.

An additional aspect of this disclosure provides a computing device for determining solutions to a number of linear matrix equations satisfying $A\vec{x} = \vec{b}$, where $A$ is a $n \times n$ matrix, $\vec{x}$ is a column vector with $n$ entries, and $\vec{b}$ is a column vector with $n$ entries. The computing device is configured to determine a linear combination of unitary matrices that is equivalent to the matrix $A$; based on the linear combination of unitary matrices, determine a column vector $\vec{x}$ that satisfies the linear matrix equation; form an updated matrix A based on the obtained column vector $\vec{x}$; form an updated column vector $\vec{b}$ based on the obtained column vector $\vec{x}$; update the coefficients of the linear combination of unitary matrices based on the updated column vector $\vec{x}$; and based on the updated linear combination of unitary matrices, determine an updated column vector $\vec{x}$ that satisfies the updated linear matrix equation.

A still further aspect of this disclosure provides a system for determining solutions to a number of linear matrix equations satisfying $A\vec{x} = \vec{b}$, where $A$ is a $n \times n$ matrix, $\vec{x}$ is a column vector with $n$ entries, and $\vec{b}$ is a column vector with $n$ entries. The system is configured to determine a linear combination of unitary matrices that is equivalent to the matrix $A$; based on the linear combination of unitary matrices, determine a column vector $\vec{x}$ that satisfies the linear matrix equation; form an updated matrix A based on the obtained column vector $\vec{x}$; form an updated column vector $\vec{b}$ based on the obtained column vector $\vec{x}$; update the coefficients of the linear combination of unitary matrices based on the updated column vector $\vec{x}$; and based on the updated linear combination of unitary matrices, determine an updated column vector $\vec{x}$ that satisfies the updated linear matrix equation.

The system may comprise at least one classical computing device, and a quantum computing device.

The system may comprise a plurality of classical computing devices.

Brief Description of the Figures

For a better understanding of examples of the present disclosure, and to show more clearly how the examples may be carried into effect, reference will now be made, by way of example only, to the following Figures in which:

Figure 1 is a flowchart illustrating an example method 100 that may be executed in order to solve a non-linear problems using iterative techniques;

Figure 2 is a flow chart of an example of a method 200, performed on at least one computing device, of determining solutions to a number of linear matrix equations satisfying $A\vec{x} = \vec{b}$, where $A$ is a $n \times n$ matrix, $\vec{x}$ is a column vector with $n$ entries, and $\vec{b}$ is a column vector with $n$ entries;

Figure 3 is a flowchart of an example of a method 300 of solving a non-linear problem using iterative techniques;

Figure 4 is a flow chart of an example implementation of step 308 of Figure 3;

Figure 5 is an example of hybrid classical-quantum method 500 for solving a non-linear problem using iterative techniques;

Figure 6 is an example of a computing device 600 for determining solutions to a number of linear matrix equations satisfying $A\vec{x} = \vec{b}$, where $A$ is a $n \times n$ matrix, $\vec{x}$ is a column vector with $n$ entries, and $\vec{b}$ is a column vector with $n$ entries; and

Figure 7 is an example of a system 700 for determining solutions to a number of linear matrix equations satisfying $A\vec{x} = \vec{b}$, where $A$ is a $n \times n$ matrix, $\vec{x}$ is a column vector with $n$ entries, and $\vec{b}$ is a column vector with $n$ entries.

Detailed Description

The following sets forth specific details, such as particular embodiments or examples for purposes of explanation and not limitation. It will be appreciated by one skilled in the art that other examples may be employed apart from these specific details. In some instances, detailed descriptions of well-known methods, nodes, interfaces, circuits, and devices are omitted so as not obscure the description with unnecessary detail. Those skilled in the art will appreciate that the functions described may be implemented in one or more nodes using hardware circuitry (e.g., analog and/or discrete logic gates interconnected to perform a specialized function, ASICs, PLAs, etc.) and/or using software programs and data in conjunction with one or more digital microprocessors or general purpose computers. Nodes that communicate using the air interface also have suitable radio communications circuitry. Moreover, where appropriate the technology can additionally be considered to be embodied entirely within any form of computer-readable memory, such as solid-state memory, magnetic disk, or optical disk containing an appropriate set of computer instructions that would cause a processor to carry out the techniques described herein.

Hardware implementation may include or encompass, without limitation, digital signal processor (DSP) hardware, a reduced instruction set processor, hardware (e.g., digital or analogue) circuitry including but not limited to application specific integrated circuit(s) (ASIC) and/or field programmable gate array(s) (FPGA(s)), and (where appropriate) state machines capable of performing such functions.

Certain embodiments of the present disclosure enable a hybrid classical-quantum system to be realized for solving non-linear problems using iterative techniques, for example, CFD and FEA problems.

It is noted that a particular property of the matrices that are associated with iteratively solving CFD and FEA problems may be exploited when decomposing the matrix $A$ into a linear combination of unitary matrices.

Although the aforementioned first non-linear step may be repeated several times as the problem is iteratively solved (where this update is based on the solution obtained from the previous iteration), for certain types of problems (such as CFD and FEA problems), the sparsity pattern of the matrix $A$ will not change, even as the values of the matrix $A$ are updated. In other words, the matrix $A$ retains a fixed sparsity pattern as the problem is iteratively solved.

In other words, in these examples, the matrix A has a fixed sparsity pattern, and only the entries in the matrix $A$ depend on $\overrightarrow{x^{n-1}}$. As a result, in the unitary decomposition of the matrix $A$, it is only the coefficients $\alpha$ that depend on $\overrightarrow{x^{n-1}}$. Therefore, in these examples, the matrix equation for $\overrightarrow{x^n}$ can be written as:

$$\sum_i \alpha_i \, (\overrightarrow{x^{n-1}}) U_i \overrightarrow{x^n} = \vec{b}(\overrightarrow{x^{n-1}})$$

where the unitary matrices $U_i$ are do not change as the values of the matrix $A$ are updated. The coefficients $\alpha_i$ then depend non-linearly on $\overrightarrow{x^{n-1}}$ via the matrix $A$.

This property may be exploited when determining the set of unitary matrices that represent the matrix $A$. The set of unitary matrices may be determined (or decomposed) such that, even if the values of the entries of the matrix $A$ are updated, the set of unitary matrices will not change. Therefore, only the coefficients of the linear combination of unitary matrices change as the entries of the matrix A are updated with each iteration of the method.

Therefore, embodiments of the present disclosure enable a more efficient method for solving non-linear problems using iterative techniques, as only the coefficients of the unitary decomposition need to be updated with each iteration of the method. Embodiments of the present disclosure also enable the decomposition of matrices with fixed sparsity patterns (which are typically associated with CFD and FEA problems) into a form suitable for execution using a quantum computing device.

Furthermore, embodiments of the present disclosure enable a more efficient method for evaluating and the re-evaluating the coefficients in the unitary decomposition as the matrix $A$ is updated, through the utilization of clusters of Pauli products (also known as Pauli strings) that have a shared sparsity pattern in the unitary decomposition.

Furthermore, in embodiments of the present disclosure enables the unitary matrices to be simply mapped to quantum computing gates, for example, where the matrix $A$ is decomposed into a linear combination of unitary matrices which are products of Pauli matrices.

It will be appreciated that the terms quantum circuit and quantum computing device may be used interchangeably throughout the disclosure. Furthermore, the term linear system, or linear systems of equations, used herein refers generically to any system of equations that can be represented by the matrix equation $A\vec{x} = \vec{b}$.

Such systems may be solved for example by solving for an update $\vec{\delta x}$ by writing $A^{n-1}(\overline{x^{n-1}} + \vec{\delta x}) = \overline{b^{n-1}}$ which can be written as the matrix equation $A^{n-1}\vec{\delta x} = \overline{b^{n-1}} - A^{n-1}\overline{x^{n-1}}$. The right hand side of this linear system still depends linearly or non-linearly on the previously updated value of $\vec{x}$, and is of the generic form to which the present disclosure may be applied.

A further common practice is to modify the linear system such that it is of the form $A'\vec{\delta x} = \vec{b} - A\vec{x}$, where the matrix $A'$ is derived from the matrix $A$ such that it has some beneficial properties that make it more computationally efficient to solve the linearized equations. For example, the matrix $A'$ may or may not have the same sparsity pattern as the matrix $A$, but the sparsity pattern of $A'$ is typically fixed, as described above. These properties of the matrix $A'$ may enable the inverse of the matrix $A'$ to be computed more simply than the inverse of the matrix $A$, and enable more efficient solutions of the linear system to be obtained via this preconditioning.

Again, this system is of the generic form to which the present disclosure may be applied. The vector $\vec{x}$ may refer to one physical variable, or any combination of physical variables present in the non-linear equations.

For simplicity, the embodiments described herein refer to the generic form $A\vec{x} = \vec{b}$, which should be taken as referring to any of the modifications to the linear systems described above, which may be implemented when the linear system is derived from the non-linear equations.

An example method utilizing this fixed sparsity pattern of matrix $A$ when decomposing the matrix $A$ is now described. It will be appreciated that the methodology herein is relevant to any application that involves solving a matrix equation one time, or multiple times.

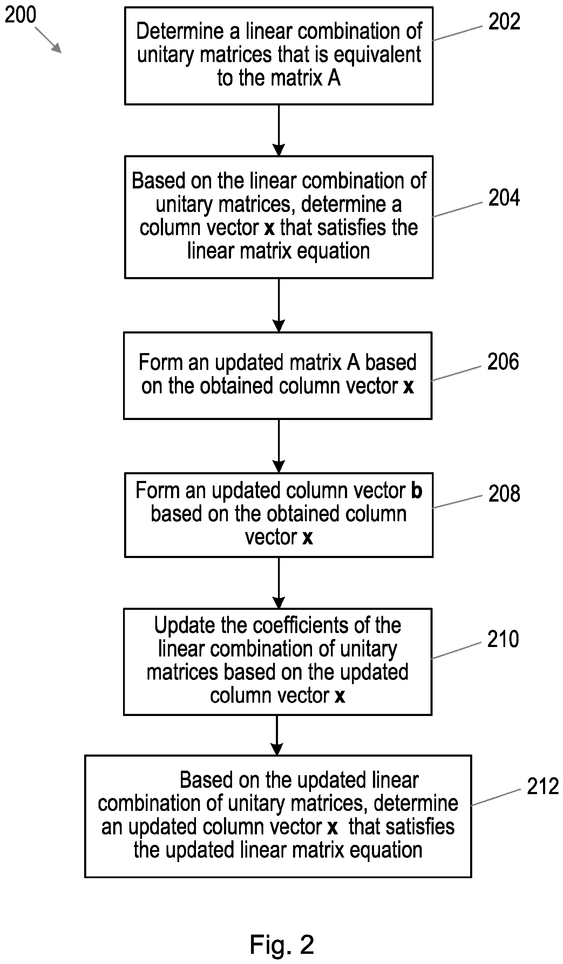

Figure 2 is a flow chart of an example of a method 200, performed on at least one computing device, of determining solutions to a number of linear matrix equations satisfying $A\vec{x} = \vec{b}$, where $A$ is a $n \times n$ matrix, $\vec{x}$ is a column vector with $n$ entries, and $\vec{b}$ is a column vector with $n$ entries. The method 200 may be executed as part of a method of solving a non-linear problem using iterative techniques, such as the method 300 described herein.

At step 202, the method 200 comprises determining a linear combination of unitary matrices that is equivalent to the matrix $A$. In some embodiments, each of the unitary matrices has a sparsity pattern that corresponds to a part of a sparsity pattern of the matrix $A$. In some embodiments, step 202 comprises forming one or more groups of unitary matrices, such that the unitary matrices comprised within a particular group share the same sparsity pattern, and, for each group of unitary matrices, determining the coefficients of the linear combination of the subset of unitary matrices comprised within the group. In some embodiments, each unitary matrix consists of a tensor product of one or more Pauli matrices and/or an identity matrix.

In some embodiments, the step 202 comprises, for each group of unitary matrices: converting each unitary matrix in the group into a column vector comprising the non-zero entries of the respective unitary matrix, and forming a cluster matrix for the group, the cluster matrix comprising each of the column vectors. In some embodiments, each cluster matrix is a unitary matrix multiplied by scalar factor of $2^{\frac{n}{2}}$ where $n$ is the number of Pauli products in each unitary.

At step 204, the method 200 comprises, based on the linear combination of unitary matrices, determining a column vector $\vec{x}$ that satisfies the linear matrix equation. In some embodiments, wherein the at least one computing device comprises a quantum computing device, the step 204 may comprise (i) manipulating quantum states of qubits of the quantum computing device based on the linear combination of unitary matrices and the vector $\vec{b}$; (ii) obtaining a measurement of one or more qubits; (iii) repeating steps (i) and (ii) to obtain a number of measurements; and (iv) based on the obtained measurements, determining the column vector $\vec{x}$. In some embodiments, an initial state of the qubits of the quantum computing device represents the column vector $\vec{b}$.

In some embodiments, manipulating quantum states of the qubits of the quantum computing device comprises, applying one or more Pauli gates to one or more qubits of the quantum computing device, wherein each of the one or more Pauli gates represents a respective unitary matrix within the linear combination of unitary matrices. Alternatively, in some embodiments, manipulating quantum states of the qubits of the quantum computing device comprises applying one or more rotation gates to one or more qubits of the quantum computing device, wherein each of the one or more rotation gates represents a respective unitary matrix within the linear combination of unitary matrices.

Alternatively, in some embodiments, wherein the at least one computing device comprises a classical computing device, the column vector $\vec{x}$ that satisfies the linear matrix equation is determined using the classical computing device.

In some embodiments, wherein the at least one computing device further comprises a number of classical computing cores, the step of determining a linear combination of unitary matrices that is equivalent to the matrix $A$ may be performed in parallel on a number of classical computing cores. In some embodiments, each of the number of classical computing cores may determine a subset of the unitary matrices comprised within the linear combination of unitary matrices. In some embodiments, each of the number of classical computing cores may determine a subset of the coefficients of the linear combination of the unitary matrices.

At step 206, the method 200 comprises forming an updated matrix A based on the obtained column vector $\vec{x}$. In some embodiments, the updated matrix A, and the matrix A, have the same sparsity pattern. In some embodiments, the updated matrix A may depend non-linearly on $\vec{x}$.

At step 208, the method 200 comprises forming an updated column vector $\vec{b}$ based on the obtained column vector $\vec{x}$. In some embodiments, the updated column vector $\vec{b}$ may depend non-linearly on $\vec{x}$.

At step 210, the method 200 comprises updating the coefficients of the linear combination of unitary matrices based on the updated column vector $\vec{x}$. In some embodiments, step 210 may comprise updating one or more values of the entries of the matrix $A$ based on the updated column vector $\vec{x}$, and updating the coefficients of the linear combination of unitary matrices based on the one or more updated values of the entries of the matrix $A$. In some embodiments, step 210 comprises, for each group of unitary matrices, determining the updated coefficients of the linear combination of the unitary matrices for the unitary matrices comprised within the group.

In some embodiments, the step of determining or updating the coefficients of the linear combination of unitary matrices based on the updated column vector $x$ is performed in parallel on a number of classical computing cores. In some embodiments, each of the number of classical computing cores may determine a subset of the updated coefficients of the linear combination of the unitary matrices.

At step 212, the method 200 comprises, based on the updated linear combination of unitary matrices and the updated column vector b, determining an updated column vector $\vec{x}$ that satisfies the updated linear matrix equation.

In some embodiments, the method 200 may return to step 206 and repeat the non-linear updates until a stopping threshold is reached.

In some embodiments, the updated column vector $\vec{x}$ represents a solution to a computational fluid dynamics problem. In some embodiments, the updated column vector $\vec{x}$ represents a solution to a finite element analysis problem. In some embodiments, the method 200 further comprises using the obtained solution in a design process of a component, sub-system or system.

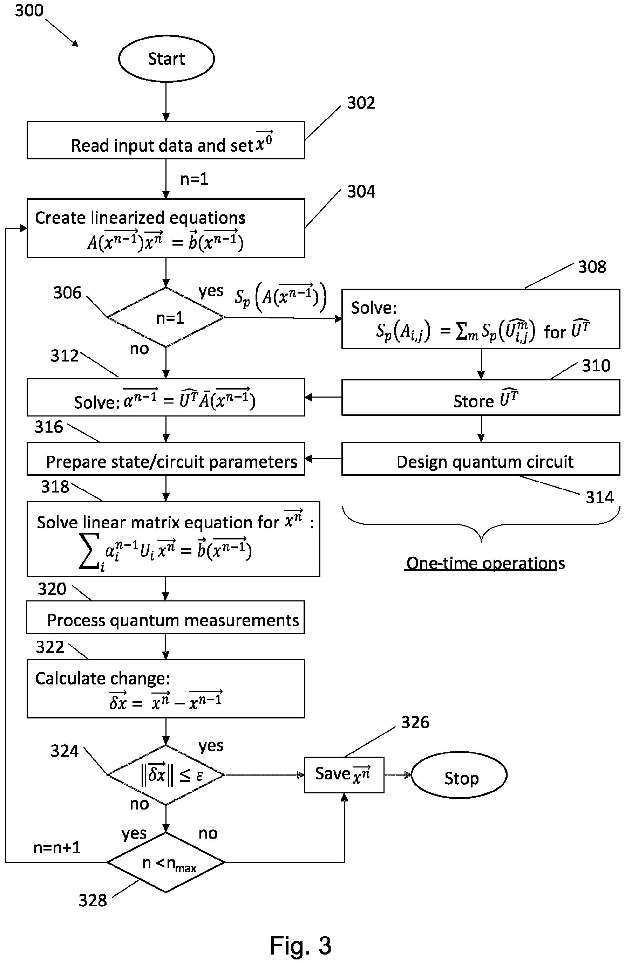

Figure 3 is a flowchart of an example of a method 300 of solving a non-linear problem using iterative techniques. Such problems may include CFD problems, FEA problems, problems in which partial differential equations are solved (for example, mesh generation), or problems in which a set or sets of simultaneous equations are solved.

As noted above, solving non-linear problems using iterative techniques typically involves expressing the non-linear equations relating to the problem as a linear set of equations to be solved. This linear set of equations may then be solved using a quantum computing device. The solution of the linear system of equations is then returned and used to update the solution to the problem. For example, the velocities and pressures in a CFD solution may be updated based on the solution of the linear system of equations. Following this, a new linearized system that depends on the updated solution is formed, and the solution to this new linearized system is then determined in the next iteration of the method.

The method 300 comprises, at step 302, reading the input data relating to a problem and determining an initial state for the problem based on the data, represented by the vector $\vec{x}_0$. The initial state may comprise one or more physical variables, such as an initial set of velocity vectors and/or initial density values and/or initial pressure values. Following step 302, the method 300 further comprises setting the value of a counter n as 1, where n represents the number of iterations of the method 300.

At step 304, the method 300 comprises expressing one or more equations relating to the problem (for example, one or more equations that describe how the variables describing the initial state evolve, such as the non-linear Navier Stokes equations) as a linearized system that aims to solve a linear matrix equation of the form $A\vec{x} = \vec{b}$, where $A$ and $\vec{b}$ depend non-linearly on $\vec{x}$. In some embodiments, for example, embodiments where the problem is a computational fluid dynamics problem, the matrix $A$ may correspond to a pressure correction matrix.

Solving the matrix equation $A\vec{x} = \vec{b}$ to obtain the vector $\vec{x}$, then enables the vector $\vec{b}$ to be updated.

The obtained vector $\vec{x}$ may then also be used to update the values of the entries of the matrix $A$ for each new iteration of the method 300. In other words, the functional dependency of the matrix equation is

$$A(\overrightarrow{x^{n-1}})\overrightarrow{x^n} = \overrightarrow{b}(\overrightarrow{x^{n-1}}).$$

As noted above, it is characteristic of the matrix A that although the entries of the matrix A are updated each time the vector $\overrightarrow{x^{n-1}}$ is updated, the sparsity pattern of the matrix A does not change. In this embodiment, the matrix A comprises real values. However, it will be appreciated that the embodiments herein can be modified to apply to matrices comprising complex values.

At step 306, the method 300 comprises determining whether the value of n is equal to 1. If the value of the n is equal to 1 (in other words, if it is determined that this is the first iteration of the method 300), the method 300 comprises determining the sparsity pattern of the matrix A, $S_p(A(\overrightarrow{x^{n-1}}))$. As noted above, the values of the entries of the matrix A are dependent on the vector $\overrightarrow{x^{n-1}}$. The method 300 then proceeds to step 308.

At step 308, the method 300 comprises determining a set of unitary matrices, where a linear combination of this set of unitary matrices is then equivalent to the matrix A. As noted above, in order to solve a linearized matrix equation of the form $A\overrightarrow{x} = \overrightarrow{b}$ on a quantum computing device, it must first be decomposed into a linear combination of unitary matrices.

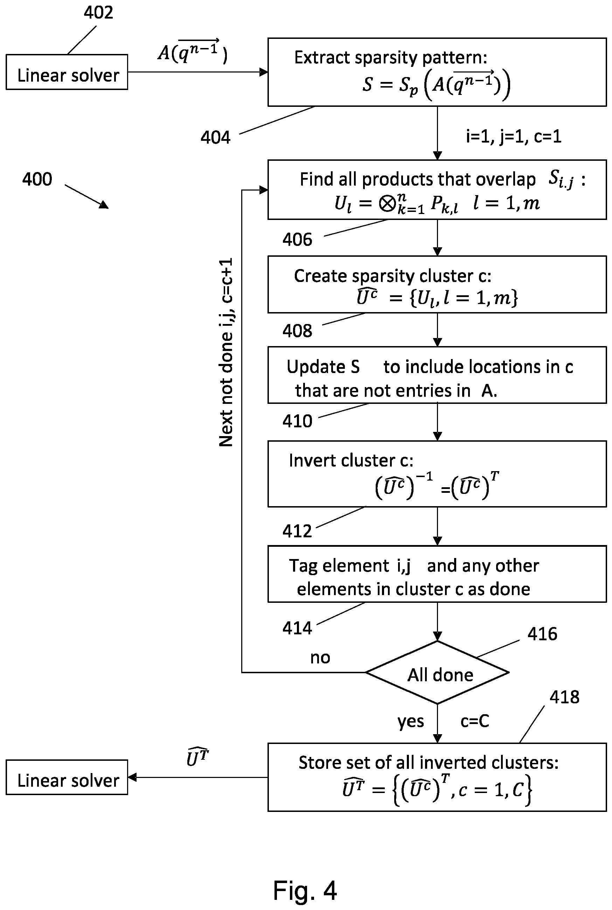

In this embodiment, step 308 comprises forming one or more groups of unitary matrices, such that the unitary matrices comprised within a particular group share the same sparsity pattern. A particular example of this step is described in greater detail with reference to Figure 4.

As the set of unitary matrices is determined based on the sparsity pattern of the matrix A, and the sparsity pattern of the matrix A does not change even as the entries of the matrix A are updated, the set of unitary matrices does not have to be re-determined each time the method 300 is repeated. Each iteration of the method 300 then only requires that the coefficients of the linear combination of unitary matrices be updated, in accordance with the solution obtained for the previous iteration of the method.

At step 310, the method 300 comprises storing the one or more groups of unitary matrices. A particular example of this step is described in greater detail with reference to Figure 4.

It will be appreciated that for some problems (for example, problems in which a mesh is refined or defined as the problem is being iteratively solved) may require the decomposition of the matrix A to be recalculated for some of the repetitions of the method 300. In other words, for certain types of problems, the steps 308 and 310 of the method 300 may be executed for more than one iteration of the method 300 as the problem is iteratively solved.

At step 312, the method 300 comprises, for each group of unitary matrices, determining the coefficients of the linear combination of the subset of unitary matrices comprised within the group. In this illustrated embodiment, the coefficients of the linear combination of the subset of unitary matrices comprised within the group are determined based on the values of the entries of the matrix A.

At step 314 of the method 300, the quantum computing device (for example, the quantum computing device 704) is designed in accordance with the determined set of unitary matrices. For example, the operations and/or gates to be applied to the quantum computing device may be determined based on the determined set of unitary matrices. As noted above, as the set of unitary matrices is determined based on the sparsity pattern of the matrix A, and the sparsity pattern of the matrix A does not change even as the entries of the matrix A are updated, the set of unitary matrices does not have to be re-determined each time the method 300 is iterated over. Similarly, in embodiments in which the operations and/or gates to be applied to the quantum computing device are based on the set of unitary matrices in the decomposition, these operations and/or gates also do not need to be updated each time the method 300 is iterated over.

In some embodiments, one or more Pauli gates may be applied to one or more qubits of the quantum computing device, wherein each of the one or more Pauli gates represents a respective unitary matrix within the set of unitary matrices. For example, in embodiments where each unitary matrix consists of a tensor product of one or more Pauli matrices and/or an identity matrix, each unitary matrix may then be represented by a Pauli gate. Additionally or alternatively, one or more rotation gates may be applied to one or more qubits of the quantum computing device, wherein each of the one or more rotation gates represents a respective unitary matrix within the set of unitary matrices.

At step 316, the method 300 comprises instantiating the quantum computing device, based on the determined coefficients and/or the column vector $\overrightarrow{b}$. For example, the determined coefficients may correspond to one or more rotation angles in a set of gates applied to the quantum computing device. In some embodiments, the quantum computing device is instantiated such that an initial state of the qubits of the quantum computing device, $|\hat{b}\rangle$, represents the column vector $\overrightarrow{b}$.

In some embodiments, the gates corresponding to the determined coefficients with values below a small threshold may be omitted in order to reduce the number of gates to be applied to the quantum computing device, enabling a more efficient quantum circuit to be formed. In this illustrated embodiment, each omitted gate is assumed to have a small or negligible impact on the output of the quantum circuit, due to the fact it corresponds to a unitary within the determined set which has a small coefficient in the linear combination of unitary matrices.

At step 318, the method 300 comprises solving the following matrix equation using the quantum computing device:

$$\sum_i \alpha_i^{n-1} U_i \, \overrightarrow{x^n} = \vec{b}(\overrightarrow{x^{n-1}})$$

It will be appreciated that several standard algorithms may be used to determine the solution to this matrix equation using a quantum computing device. For example, non-variational algorithms for linear systems such as the HHL and QSVT algorithms may be used.

In some embodiments, the step 318 may comprise manipulating quantum states of qubits of the quantum computing device based on the linear combination of unitary matrices and the vector $\vec{b}$, as described above. In some embodiments, the step 318 may further comprise obtaining a measurement of one or more qubits of the quantum computing device. In this illustrated embodiment, the quantum computing device may require that the step 318 be executed a number of times to provide a series of measurements that may then be processed to provide an approximation of the column vector $\overrightarrow{x^n}$. It will be appreciated that the fidelity of the approximation may increase as the number of executions is increased.

In step 320, the method 300 comprises, based on the obtained measurement, determining the column vector $\overrightarrow{x^n}$. In some embodiments, the column vector $\overrightarrow{x^n}$ may be obtained based on a statistical distribution of a plurality of obtained measurements, which have been obtained following executing the step 318 on the quantum computing device a number of times.

It will be appreciated that the column vector $\overrightarrow{x^n}$ represents the current solution to the problem obtained for the current iteration of the method 300 (that is, the solution to the problem that has been obtained on the nth iteration of the method 300).

In an alternative embodiment, rather than determining a solution to the matrix equation using a quantum computing device, the column vector $\overrightarrow{x^n}$ that satisfies the linear matrix equation may instead be determined using a classical computing device.

At step 322, the method 300 comprises determining the vector $\overrightarrow{\delta x}$, where $\overrightarrow{\delta x} = \overrightarrow{x^n} - \overrightarrow{x^{n-1}}$. That is, the vector $\overrightarrow{\delta x}$ represents the difference between the current solution to the problem represented by the column vector $\overrightarrow{x^n}$, and the previous solution to the problem represented by the column vector $\overrightarrow{x^{n-1}}$.

At step 324, the method 300 comprises determining whether a particular convergence criterion has been met. For example, the convergence criterion may be that the absolute value of the vector $\overrightarrow{\delta x}$ is below or equal to a particular threshold $\varepsilon$. If it is determined that the particular convergence criterion has been met, the method 300 proceeds to step 326. Otherwise, the method 300 proceeds to step 328.

At step 328, the method 300 comprises determining whether a maximum number of iterations of the method has been exceeded. If it is determined that the maximum number of iterations has been exceeded, the method 300 proceeds to step 326. Otherwise, the method 300 proceeds to step 304, and the value of the counter n is incremented by 1. At step 304, the matrix $A$ and the column vector $\vec{b}$ are updated based on the obtained column vector $\vec{x}$. That is, the solution of the linearized equations is used to update the non-linear variables, and create new linearized equations, which are then solved in the next iteration of the method 100 as described above.

At step 326, the updated column vector $\overrightarrow{x^n}$ is saved as the solution to the problem associated with the final linearized system $A\vec{x} = \vec{b}$. That is, at step 326, the non-linear equations are considered to have been solved. It will be appreciated that, in some embodiments, $\overrightarrow{x^n}$ may represent a solution to a computational fluid dynamics problem. In other embodiments, $\overrightarrow{x^n}$ may represent a solution to a finite element analysis problem. In some embodiments, the obtained solution may then be used in a design process of a component, sub-system or system.

As noted above, each iteration of the method 300 solves an updated linear matrix equation (where this update is based on the previously obtained solution). However, the sparsity pattern of the matrix $A$ does not change despite this updating, enabling the same set of unitary matrices to be used in further iterations of the method 300. The coefficients of the linear combination of unitary matrices are then updated at step 314, based on the updated values of the entries of the matrix $A$.

It will be appreciated that the steps of either determining or updating the coefficients of the linear combination of unitary matrices may be performed in parallel on a number of classical computing cores. For example, each of the number of classical computing cores may determine or update a subset of the coefficients of the linear combination of the unitary matrices.

Figure 4 is a flow chart of an example implementation of step 308 of Figure 3. That is, Figure 4 is a flow chart of an example method determining a set of unitary matrices, where a linear combination of the set of unitary matrices is then equivalent to the matrix $A$, that depends on the sparsity pattern of the matrix $A$ being fixed.

At step 402, the matrix $A$ is obtained. As noted above, the entries of the matrix $A$ are based on the value of the vector $\overrightarrow{x^{n-1}}$, which represents the current solution to the problem that is being solved.

At step 404, the method 400 comprises extracting the sparsity pattern of matrix $A$. In this embodiment, step 404 further comprises setting the variables i, j and c to 1, where i,j represents an entry comprised within the sparsity pattern, and where c represents the cluster number (as will be explained in greater detail below). In this embodiment, the method 400 begins iterating over the sparsity pattern beginning at the entry i,j=1,1. However, it will be appreciated that the method 400 may begin iterating over any entry in the sparsity pattern. Additionally, although the method 400 iterates over the entries of the sparsity pattern of matrix *A*, it will be appreciated that the method 400 may be modified to instead iterate over the unitary matrices. In this embodiment, each of the unitary matrices consists of a tensor product of one or more Pauli matrices and/or an identity matrix. That is, each of the unitary matrices are formed by a tensor product of the X, Y, Z and identity, I, matrices, to form a Pauli product. Each Pauli product will comprise n matrices, where $N=2^n$ is the number of rows (the rank) in the matrix *A*. If the rank of the matrix *A* is not equal to a power of 2, then the matrix *A* may be extended with an identity block in the lower right corner. That is, in this illustrated embodiment, each of the unitary matrices is a Pauli product (or a Pauli string).

At step 406, for the first entry in the sparsity matrix, $S_{11}$, the method 400 comprises determining a subset of unitary matrices which have sparsity patterns which overlap with the first entry in the sparsity matrix $S_{11}$.

As the method 400 is iterated over, step 406 will comprise determining which of the unitary matrices comprise an entry at the corresponding location i,j of the sparsity patten. Each of the determined unitary matrices will therefore have a sparsity pattern that corresponds to a part of a sparsity pattern of the matrix *A*.

The aforementioned Pauli products will form clusters, where for each cluster, all of the members of that particular cluster will share the same sparsity pattern. Each Pauli product is uniquely a member of one of these formed clusters, and to which cluster each Pauli product belongs may be determined by determining whether the Pauli product has a sparsity pattern which overlaps an entry in the sparsity pattern of the matrix *A*. It is noted that, due to the high degree of sparsity in matrices typically associated with problems such as CFD and FEA problems, many unitary (or Pauli product) clusters will not overlap with the entries in the matrix *A*.

It will be appreciated that, in this embodiment, as each unitary matrix comprises a single entry in each row and column, that the sparse matrices may be stored in a compressed row or a compressed column format, as the rows after i, or the columns after j, do not need to be searched over.

Following step 406, at step 408, the determined set of unitary matrices are grouped. In some embodiments, each unitary matrix in the group may be converted into a column vector comprising the non-zero entries of the respective unitary matrix, and a cluster matrix may then be formed for the group of unitary matrices, comprising each of these column vectors.

At step 410, the sparsity pattern of the matrix *A* is augmented with zero-entries in order to create a common sparsity pattern with the sum of the group of unitary matrices. The sparsity pattern of the group of unitary matrices (the cluster) may include elements of the matrix that are not part of the sparsity pattern of the matrix *A*. That is, the unitary matrices in the cluster may comprise a non-zero entry where the equivalent entry in the matrix *A* is always zero. These entries are then added to the sparsity pattern of the matrix *A*, as it is necessary that the calculation of the unitary coefficients ensures that the value of these entries is zero.

At step 412, the cluster matrix is inverted. It is noted that the inverse of each cluster matrix that is formed in this manner is equal to its transpose, when the matrix *A* consists of real-valued entries. Each cluster matrix is a unitary matrix multiplied by a scalar factor of $2^{\frac{n}{2}}$, where *n* is the number of Pauli products in each unitary matrix.

Therefore, the transpose of each of these cluster matrices can be determined without a computationally expensive matrix inversion step.

At step 414, it is then determined whether any further elements of the sparsity pattern share the sparsity pattern of the formed cluster. If so, these entries of the sparsity pattern are associated with the cluster marked c=1. The method 400 then marks these entries of the sparsity pattern as complete, such that the method 400 will not iterate over them if the method 400 is repeated.

At step 416, the method 400 determines whether there are any entries in the sparsity pattern that have not been marked as complete (in other words, whether there are any entries in the sparsity pattern that have not been associated with a formed cluster). If there are entries in the sparsity pattern that have not been marked as complete, the values of i and j are updated to represent the next entry in the sparsity matrix that is not associated with a cluster, and the value of c is incremented by 1 to represent a new cluster. The method 400 then returns to step 406 for the next relevant entry in the sparsity matrix.

If all the entries in the sparsity pattern have been marked as complete, the set of transposed cluster matrices are stored at step 418, as is the case in step 310 of the method 300. It will be appreciated that storing the transposed cluster matrix for each group of unitary matrices enables the coefficients of the unitary decomposition to be quickly recomputed each time the linearized matrix system is updated (for example, at step 314 of the method 300).

It is noted that all the entries in each transposed cluster matrix are $\pm 1$, which minimizes the storage required to store the transposed cluster matrices. For example, the transposed cluster matrices may be stored using a single byte using a standard programming type, or may be stored using a single bit using a custom programming type.

The sparsity pattern of each cluster matrix is also stored. This may be optimized by storing the sparsity pattern of each cluster once for the cluster, rather than with every unitary in the cluster (as each unitary in the cluster shares the same sparsity pattern).

In some embodiments, this method of determining the set of unitary matrices *A* may be performed in parallel on a number of classical computing cores. For example, in some embodiments, each of the number of classical computing cores may determine a subset of the unitary matrices comprised within the linear combination of unitary matrices. For example, each of the number of classical computing cores may execute the step 406 described above for one or more unitary matrices.

Such parallelization may be realized by dividing the unitary matrices between the available classical computing cores, noting that each unitary matrix is independent of the others. For example, if there are N unitary matrices to be analyzed, and M computing cores available, then each core may process N/M unitary matrices. The unitary matrices may be indexed such that they may be processed without repetition. The indices may be mapped to unitary matrices using base 4 numbers, as there are 4 options available for each Pauli product (I, X, Y, Z). For example, for an index n= 114, the base 4 value is 1302 = 1x64 + 3x16 + 0x4 + 2 and the corresponding unitary is U=X $\otimes$ Z $\otimes$I$\otimes$Y. For each index n, the corresponding unitary will then be unique.

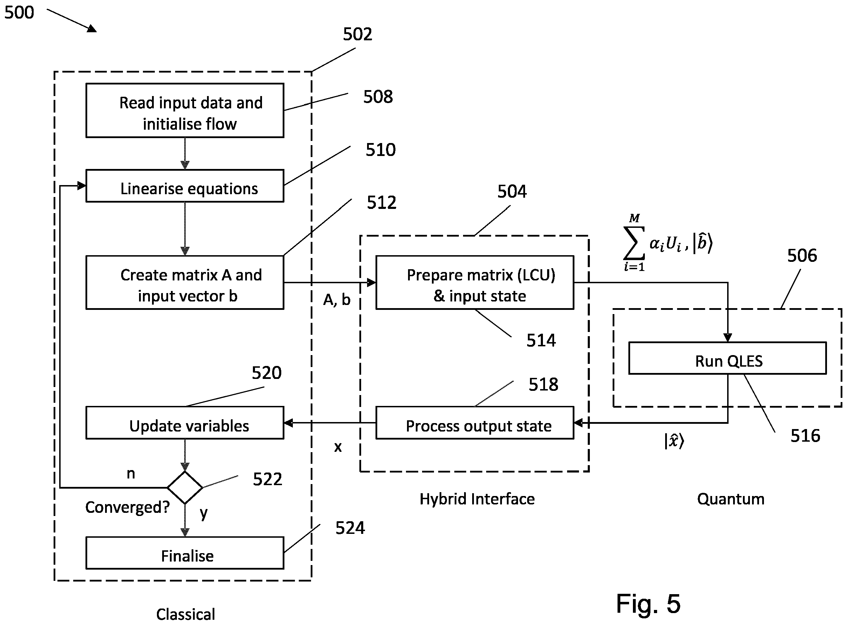

Figure 5 is an example of hybrid classical-quantum method 500 for solving a non-linear problem using iterative techniques. The system executing the method 500 comprises a classical computing device 502, a hybrid interface 504, and a quantum computing device 506.

In this illustrated embodiment, the hybrid interface 504 is a classical computing device. In some embodiments, the classical computing device 502 comprises the hybrid interface 504. In some embodiments, the hybrid interface 504 is a separate classical computing device from the classical computing device 502. In these embodiments, the hybrid interface 504 may be designed for communicating between classical computing devices and quantum computing devices. For example, the hybrid interface 504 may be configured to rapidly process repeated executions of step 516 to construct an approximation of $\vec{x}$.

At step 508, the method 500 comprises reading the input data relating to a problem and determining an initial state for the problem based on this data. For example, step 508 may correspond to step 302 of Figure 3.

At steps 510 and 512, the method 500 comprises expressing one or more equations relating to the problem as a linearized system that aims to solve a linear matrix equation of the form $A\vec{x} = \vec{b}$, where $A$ and $\vec{b}$ depend non-linearly on $\vec{x}$. For example, steps 510 and 512 may correspond to step 304 of Figure 3.

At step 514, the classical computing device 502 transmits the matrix $A$ and the column vector $\vec{b}$ to the hybrid interface 504. The hybrid interface 504 then determines a linear combination of unitary matrices that is equivalent to the matrix $A$, and determines an initial state for the quantum computing device 506. For example, step 514 may correspond to steps 308, 310, 312, 314 and 316 of Figure 3.

At step 516, the quantum computing device receives the linear combination of unitary matrices that is equivalent to the matrix $A$ and an initial state for the quantum computing device 506, and then solves the following matrix equation:

$$\sum_i \alpha_i^{n-1} U_i \overrightarrow{x^n} = \vec{b}(\overrightarrow{x^{n-1}})$$

For example, step 516 may correspond to step 318 of Figure 3.

A measurement of the output state of the quantum computing device 506, $|\hat{x}\rangle$, is then returned to the hybrid interface 504.

At step 518, the hybrid interface 504 processes the measurement to determine the column vector $\vec{x}$. The determined column vector $\vec{x}$ is then returned to the classical computing device 502. For example, step 518 may correspond to step 320 of Figure 3.

In this illustrated embodiment, step 516 may repeated a number of times to create statistical distribution of measurements of $|\hat{x}\rangle$ that are then used in step 518 to construct an approximation of the column vector $\vec{x}$.

At step 520, the classical computing device 502 updates the variables of the linearized equations. For example, step 520 may comprise determining the vector $\overrightarrow{\delta x}$, where $\overrightarrow{\delta x} = \overrightarrow{x^n} - \overrightarrow{x^{n-1}}$. That is, the vector $\overrightarrow{\delta x}$ represents the difference between the current solution represented by the column vector $\overrightarrow{x^n}$, and the previous solution represented by the column vector $\overrightarrow{x^{n-1}}$.

At step 522, the classical computing device 502 determines whether the solution to the non-linear problem has converged. For example, step 522 may correspond to steps 324 and/or 328 of the method 300.

If it is determined that the solution has converged, the updated column vector $\vec{x}$ is saved as the solution to the problem at step 524. If it is determined that the solution has not converged, the method 500 returns to step 510, and the linearized system of equations are updated so as to solve for an updated column vector $\vec{x}$.

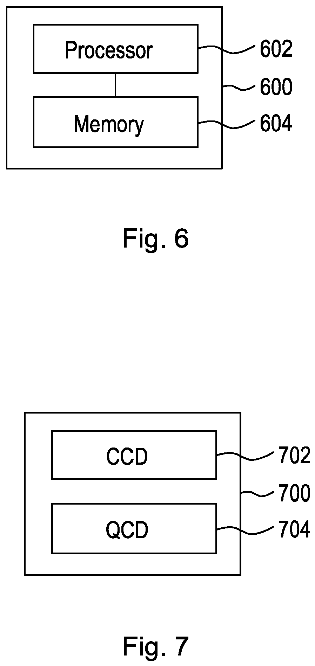

Figure 6 is a schematic of an example of a computing device 600 for determining solutions to a number of linear matrix equations satisfying $A\vec{x} = \vec{b}$, where $A$ is a $n \times n$ matrix, $\vec{x}$ is a column vector with $n$ entries, and $\vec{b}$ is a column vector with $n$ entries. The computing device 600 comprises processing circuitry 602 (e.g. one or more processors) and a memory 604 in communication with the processing circuitry 602. The memory 604 contains instructions executable by the processing circuitry 602. In one embodiment, the memory 604 contains instructions executable by the processing circuitry 602 such that the computing device 600 is operable to determine a linear combination of unitary matrices that is equivalent to the matrix $A$; based on the linear combination of unitary matrices, determine a column vector $\vec{x}$ that satisfies the linear matrix equation; form an updated matrix A based on the obtained column vector $\vec{x}$; form an updated column vector $\vec{b}$ based on the obtained column vector $\vec{x}$; update the coefficients of the linear combination of unitary matrices based on the updated column vector $\vec{x}$; and based on the updated linear combination of unitary matrices, determine an updated column vector $\vec{x}$ that satisfies the updated linear matrix equation. In some examples, the memory 604 contains instructions executable by the processing circuitry 602 such that the computing device 600 is operable to carry out the methods 200, 300 and 400 described above.

Figure 7 is a schematic of an example of a system 700 for determining solutions to a number of linear matrix equations satisfying $A\vec{x} = \vec{b}$, where $A$ is a $n \times n$ matrix, $\vec{x}$ is a column vector with $n$ entries, and $\vec{b}$ is a column vector with $n$ entries. The system 700 comprises at least one classical computing device 702, and a quantum computing device 704. The at least one classical computing device 702 may be configured to determine a linear combination of unitary matrices that is equivalent to the matrix $A$. The quantum computing device 704 may be configured to, based on the linear combination of unitary matrices, determine a measurement that represents a column vector $\vec{x}$ that satisfies the linear matrix equation. In this illustrated embodiment, the determined measurement comprises a series of measurements of an output state of the quantum computing device 704, where each measurement within the series of measurements is obtained following a respective execution of the quantum computing device 704. The at least one classical computing device 702 may be further configured to, based on the determined measurement, obtain the column vector $\vec{x}$; form an updated matrix A based on the obtained column vector $\vec{x}$; form an updated column vector $\vec{b}$ based on the obtained column vector $\vec{x}$; update the coefficients of the linear combination of unitary matrices based on the updated column vector $\vec{x}$. The quantum computing device 704 may be further configured to, based on the updated linear combination of unitary matrices, determine a further measurement that represents an updated column vector $\vec{x}$ that satisfies the updated linear matrix equation. Therefore, in some examples, the system 700 is operable to carry out the methods 200, 300 and 400 described above. In some examples, the at least one classical computing device 702 is operable to carry out at least part of the methods 200, 300 and 400 described above. In some examples, the quantum computing device 704 is operable to carry out at least part of the methods 200 and 300 described above. In some embodiments, the at least one classical computing device 702 may comprise the classical computing device 502 described above. In some embodiments, at least one classical computing device 702 may comprise the classical computing device 502 and the hybrid interface 504 described above.

Although the embodiments described herein relate to solving matrix equations where the matrices are real valued, it will be appreciated that these methods may also be extended to solve matrix equations wherein the matrices are complex valued.

As indicated above, in some examples, the sparsity pattern of the matrix $A$ does not change despite the update of the coefficients, enabling the same set of unitary matrices to be used in further iterations. Therefore, the set of unitary matrices do not have to be recalculated for each iteration, only the coefficients need to be updated.

Also indicated above, in some examples, the steps of either determining or updating the coefficients of the linear combination of unitary matrices may be performed in parallel on a number of classical computing cores. For example, each of the number of classical computing cores may determine or update a subset of the coefficients of the linear combination of the unitary matrices. Additionally or alternatively, for example, each of the number of classical computing cores may determine or update the coefficients in a subset of the unitary matrices. For example, each cluster may be processed using one core (or the processing of the matrices in a cluster may be split among multiple cores).

The general advantages of the proposed solutions in some examples are that the methods enable the decomposition of an arbitrary matrix into a form that may be suitably executed on a quantum computing device, including the larger and more complex matrices associated with CFD and FEA problems. Furthermore, the decomposition may be utilized with non-variational algorithms for linear systems such as the HHL and QSVT algorithms. Embodiments of the present disclosure also involve only a one-time computationally expensive decomposition step, that is performed only on the first iteration of the method, in which the set of unitary matrices of the linear combination of unitary matrices is determined, which are then re-used for each further iteration of the method.

It should be noted that the above-mentioned examples illustrate rather than limit the invention, and that those skilled in the art will be able to design many alternative examples without departing from the scope of the appended statements. The word "comprising" does not exclude the presence of elements or steps other than those listed in a claim, "a" or "an" does not exclude a plurality, and a single processor or other unit may fulfil the functions of several units recited in the statements below. Where the terms, "first", "second" etc. are used they are to be understood merely as labels for the convenient identification of a particular feature. In particular, they are not to be interpreted as describing the first or the second feature of a plurality of such features (i.e., the first or second of such features to occur in time or space) unless explicitly stated otherwise. Steps in the methods disclosed herein may be carried out in any order unless expressly otherwise stated. Any reference signs in the statements shall not be construed so as to limit their scope.

**Claims**

1. A method, performed on at least one computing device, of determining solutions to a number of linear matrix equations satisfying $A\vec{x} = \vec{b}$, where $A$ is a $n \times$

$n$ matrix, $\vec{x}$ is a column vector with $n$ entries, and $\vec{b}$ is a column vector with $n$ entries, the method comprising:

determining a linear combination of unitary matrices that is equivalent to the matrix $A$;
based on the linear combination of unitary matrices, determining a column vector $\vec{x}$ that satisfies the linear matrix equation;
forming an updated matrix A based on the obtained column vector $\vec{x}$;
forming an updated column vector $\vec{b}$ based on the obtained column vector $\vec{x}$;
updating the coefficients of the linear combination of unitary matrices based on the updated column vector $\vec{x}$; and
based on the updated linear combination of unitary matrices, determining an updated column vector $\vec{x}$ that satisfies the updated linear matrix equation.

2. The method according to claim 1, wherein the at least one computing device comprises a quantum computing device, and wherein the step of determining a column vector $\vec{x}$ that satisfies the linear matrix equation comprises:

(i) manipulating quantum states of qubits of the quantum computing device based on the linear combination of unitary matrices and the vector $\vec{b}$;
(ii) obtaining a measurement of one or more qubits;
(iii) repeating steps (i) and (ii) to obtain a number of measurements; and
(iv) based on the obtained measurements, determining the column vector $\vec{x}$.

3. The method according to claim 2, wherein an initial state of the qubits of the quantum computing device represents the column vector $\vec{b}$.

4. The method according to claim 2 or 3, wherein manipulating quantum states of the qubits of the quantum computing device comprises:

applying one or more Pauli gates to one or more qubits of the quantum computing device, wherein each of the one or more Pauli gates represents a respective unitary matrix within the linear combination of unitary matrices; or
applying one or more rotation gates to one or more qubits of the quantum computing device, wherein each of the one or more rotation gates represents a respective unitary matrix within the linear combination of unitary matrices.

5. The method according to claim 1, wherein the at least one computing device comprises a classical computing device, and wherein the column vector $\vec{x}$ that satisfies the linear matrix equation is determined using the classical computing device.

6. The method according to any preceding claim, wherein the at least one computing device further comprises a number of classical computing cores, and wherein the step determining a linear combination of unitary matrices that is equivalent to the matrix $A$ is performed in parallel on a number of classical computing cores.

7. The method according to claim 6, the method comprising, for each of the number of classical computing cores:
determining a subset of the unitary matrices comprised within the linear combination of unitary matrices.

8. The method according to claim 6 or 7, the method comprising, for each of the number of classical computing cores:
determining a subset of the coefficients of the linear combination of the unitary matrices.

9. The method according to any preceding claim, wherein the at least one computing device further comprises a number of classical computing cores, and wherein the step of updating the coefficients of the linear combination of unitary matrices based on the updated column vector $x$ is performed in parallel on a number of classical computing cores.

10. The method according to claim 9, the method comprising, for each of the number of classical computing cores:
determining a subset of the updated coefficients of the linear combination of the unitary matrices.

11. The method according to any preceding claim, wherein the updated column vector $\vec{x}$ represents a solution to a problem associated with the linearized system $A\vec{x} = \vec{b}$.

12. The method according to claim 11, wherein the updated column vector $\vec{x}$ represents a solution to a computational fluid dynamics problem, or wherein the updated column vector $\vec{x}$ represents a solution to a finite element analysis problem.

13. The method according to claim 11 or 12, the method further comprising:
using the obtained solution in a design process of a component, sub-system or system.

14. A system for determining solutions to a number of linear matrix equations satisfying $A\vec{x} = \vec{b}$, where $A$ is a $n \times n$ matrix, $\vec{x}$ is a column vector with $n$ entries,

and $\vec{b}$ is a column vector with $n$ entries, the system configured to:

> determine a linear combination of unitary matrices that is equivalent to the matrix $A$;
> based on the linear combination of unitary matrices, determine a column vector $\vec{x}$ that satisfies the linear matrix equation;
> form an updated matrix A based on the obtained column vector $\vec{x}$;
> form an updated column vector $\vec{b}$ based on the obtained column vector $\vec{x}$;
> update the coefficients of the linear combination of unitary matrices based on the updated column vector $\vec{x}$; and
> based on the updated linear combination of unitary matrices, determine an updated column vector $\vec{x}$ that satisfies the updated linear matrix equation.

15. The system according to claim 14, wherein the system comprises at least one classical computing device, and a quantum computing device.

Fig. 1

200

Determine a linear combination of unitary matrices that is equivalent to the matrix A — 202

Based on the linear combination of unitary matrices, determine a column vector **x** that satisfies the linear matrix equation — 204

Form an updated matrix A based on the obtained column vector **x** — 206

Form an updated column vector **b** based on the obtained column vector **x** — 208

Update the coefficients of the linear combination of unitary matrices based on the updated column vector **x** — 210

Based on the updated linear combination of unitary matrices, determine an updated column vector **x** that satisfies the updated linear matrix equation — 212

Fig. 2

Fig. 3

**402**

Linear solver $\xrightarrow{A(\overrightarrow{q^{n-1}})}$ Extract sparsity pattern:
$$S = S_p\left(A(\overrightarrow{q^{n-1}})\right)$$

**404**

**400**

$i=1, j=1, c=1$

Find all products that overlap $S_{i,j}$ :
$$U_l = \bigotimes_{k=1}^{n} P_{k,l} \quad l = 1, m$$

**406**

Next not done i,j, c=c+1

Create sparsity cluster c:
$$\widehat{U^c} = \{U_l, l = 1, m\}$$

**408**

Update S to include locations in c that are not entries in A.

**410**

Invert cluster c:
$$\left(\widehat{U^c}\right)^{-1} = \left(\widehat{U^c}\right)^T$$

**412**

Tag element i,j and any other elements in cluster c as done

**414**

no

**416**

All done

yes   $c=C$

**418**

Linear solver $\xleftarrow{\widehat{U^T}}$ Store set of all inverted clusters:
$$\widehat{U^T} = \left\{\left(\widehat{U^c}\right)^T, c = 1, C\right\}$$

Fig. 4

Fig. 5

Fig. 6

Fig. 7

## EUROPEAN SEARCH REPORT

**Europäisches Patentamt**
**European Patent Office**
**Office européen des brevets**

Application Number

**EP 23 16 9767**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AIDAN PELLOW-JARMAN ET AL: "Near Term Algorithms for Linear Systems of Equations", ARXIV.ORG, CORNELL UNIVERSITY LIBRARY, 201 OLIN LIBRARY CORNELL UNIVERSITY ITHACA, NY 14853, 25 August 2021 (2021-08-25), XP091039380, * page 1 - page 12, right-hand column, paragraph 3 * | 1-15 | INV. G06N10/60 |
| A | ARAM W HARROW ET AL: "Quantum algorithm for solving linear systems of equations", ARXIV.ORG, CORNELL UNIVERSITY LIBRARY, 201 OLIN LIBRARY CORNELL UNIVERSITY ITHACA, NY 14853, 19 November 2008 (2008-11-19), XP080441535, DOI: 10.1103/PHYSREVLETT.103.150502 * the whole document * | 1-15 | |
| A | ANDREW M CHILDS ET AL: "Quantum algorithm for systems of linear equations with exponentially improved dependence on precision", ARXIV.ORG, CORNELL UNIVERSITY LIBRARY, 201 OLIN LIBRARY CORNELL UNIVERSITY ITHACA, NY 14853, 7 November 2015 (2015-11-07), XP081364077, DOI: 10.1137/16M1087072 * the whole document * | 1-15 | TECHNICAL FIELDS SEARCHED (IPC)  G06N |

-/--

The present search report has been drawn up for all claims

| Place of search | Date of completion of the search | Examiner |
|---|---|---|
| The Hague | 26 September 2023 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt

European Patent Office

Office européen des brevets

# EUROPEAN SEARCH REPORT

Application Number

**EP 23 16 9767**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Leong Fong Yew ET AL: "Variational quantum evolution equation solver", , 6 April 2022 (2022-04-06), XP093085373, Retrieved from the Internet: URL:https://arxiv.org/pdf/2204.02912.pdf [retrieved on 2023-09-25] * the whole document * | 1-15 | |
| A | WO 2022/045938 A1 (ERICSSON TELEFON AB L M [SE]) 3 March 2022 (2022-03-03) * the whole document * | 1-15 | |
| X,P | LEIGH LAPWORTH: "Implicit Hybrid Quantum-Classical CFD Calculations using the HHL Algorithm", ARXIV.ORG, CORNELL UNIVERSITY LIBRARY, 201 OLIN LIBRARY CORNELL UNIVERSITY ITHACA, NY 14853, 16 September 2022 (2022-09-16), XP091319731, * the whole document * | 1-15 | |
| | | | TECHNICAL FIELDS SEARCHED (IPC) |
| X,P | LEIGH LAPWORTH: "A Hybrid Quantum-Classical CFD Methodology with Benchmark HHL Solutions", ARXIV.ORG, CORNELL UNIVERSITY LIBRARY, 201 OLIN LIBRARY CORNELL UNIVERSITY ITHACA, NY 14853, 1 June 2022 (2022-06-01), XP091236797, * the whole document * | 1-15 | |

The present search report has been drawn up for all claims

| Place of search | Date of completion of the search | Examiner |
|---|---|---|
| The Hague | 26 September 2023 | Volkmer, Markus |

EPO FORM 1503 03.82 (P04C01)

## ANNEX TO THE EUROPEAN SEARCH REPORT
## ON EUROPEAN PATENT APPLICATION NO.

EP 23 16 9767

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2023

| Patent document cited in search report | Publication date | Patent family member(s) | Publication date |
|---|---|---|---|
| WO 2022045938 A1 | 03-03-2022 | NONE | |

EPO FORM P0459

For more details about this annex : see Official Journal of the European Patent Office, No. 12/82